Europäisches Patentamt

European Patent Office

Office européen des brevets

(19)

(11) Publication number: **0 074 719**
**B1**

(12) **EUROPEAN PATENT SPECIFICATION**

(45) Date of publication of patent specification: **12.03.86**

(51) Int. Cl.⁴: **G 03 G 15/28**

(21) Application number: **82304252.8**

(22) Date of filing: **11.08.82**

(54) Imaging device.

(30) Priority: **11.08.81 GB 8125080**

(43) Date of publication of application:
**23.03.83 Bulletin 83/12**

(45) Publication of the grant of the patent:
**12.03.86 Bulletin 86/11**

(84) Designated Contracting States:
**DE FR GB NL**

(56) References cited:
**AT-B- 368 321**
**US-A-3 409 899**
**US-A-3 512 158**
**US-A-3 953 681**
**US-A-4 041 519**

(73) Proprietor: **XEROX CORPORATION**
**Xerox Square - 020**
**Rochester New York 14644 (US)**

(72) Inventor: **O'Connell, Patrick Anthony**
**2813 Calvin Court**
**Fremont California 94536 (US)**

(74) Representative: **Goode, Ian Roy et al**
**European Patent Attorney c/o Rank Xerox**
**Limited Patent Department Rank Xerox House**
**338 Euston Road**
**London NW1 3BH (GB)**

Courier Press, Leamington Spa, England.

## Description

This invention relates to an imaging device according to the precharacterising portion of claim 1. It further relates to a copying apparatus and information network comprising such imaging devices.

Such an imaging device may consist of a linear array of photosensors, such as photoresistors, coupled electrically to a parallel array of marking elements such as styli. All of the sets of photosensors and styli (and their associated coupling circuits) operate individually, simultaneously, and in parallel. A device of this kind, which may be called an image bar, may be used as a copier element by exposing the photosensor array to an illuminated line image of an original, and scanning either the image or the image bar to give a line-by-line scan of the original. The output side of the image bar simultaneously writes a line-by-line charge image on to a suitable receptor to either cause direct colouration in correspondence with the original or to provide a latent image for subsequent development.

An image bar of this general kind used as a copier element is described in US—A—3409899.

If the known kind of image bar is used with known photosensitive materials, the levels of illumination required for practical copying purposes are very much larger than those required by conventional copiers.

The present invention seeks to overcome this excessive illumination requirement by providing an imaging device as characterised in claim 1.

The advantages offered by the invention are that by providing the amplifiers on the common structure, the low cost and compact nature of the image bar are maintained. The use of thin film transistor amplifiers allows the fabrication of the photosensors, amplifiers and styli in a compatible technology, giving rise to a low cost unit with sufficient amplification that the illumination requirement can be reduced below that of a conventional copier. This enables the design of a very low cost, low power, portable copier.

Ways of putting the invention into effect will now be described in more detail, with reference to the accompanying drawings, in which:—

Figure 1 is a circuit diagram of one section (reading element, electrical circuit, marking element) of an image bar in accordance with the invention, including an interface arrangement for communication with a remote image bar;

Figures 2, 3 and 4 are respectively an equivalent circuit, a side view, and a plan view of one possible construction of the image bar whose circuit is shown in Figure 1;

Figure 5 is a schematic diagram of an input-output arrangement for the image bar of Figures 1 to 4;

Figure 6 is a side view of the image bar arranged for copying a document.

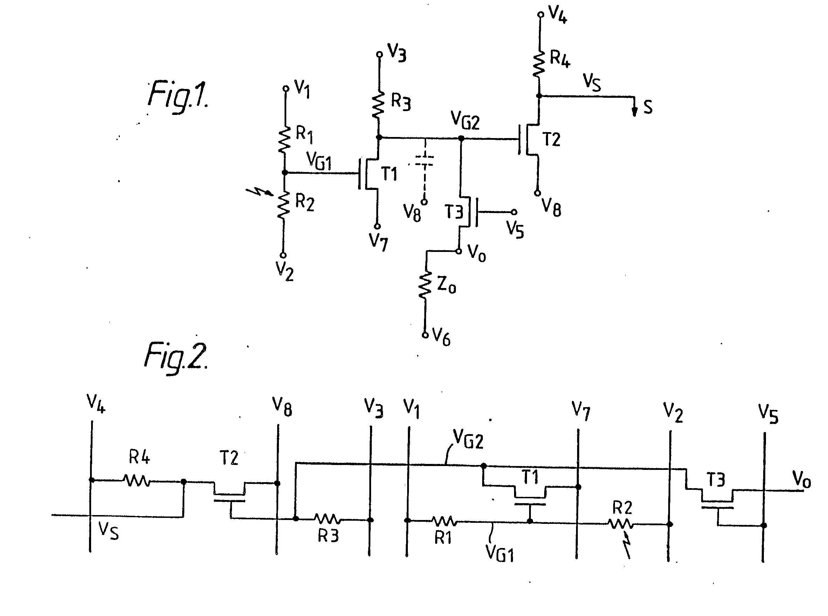

Referring to Figure 1, the circuit diagram represents the circuitry interposed between a photosensitive reading element in the form of a photoresistor R2 and a marking element in the form of a stylus S. The circuit represents only one section of the image bar; it is repeated as many times as there are photosensors and styli in the image bar, for example of the order of 3000 of them to cover an A4 page width.

The circuit of Figure 1 includes three transistors $T_1$, $T_2$ and $T_3$, and four resistors $R_1$ to $R_4$. For use of the image bar in the direct copying mode, the two-stage amplifier incorporating transistors $T_1$ and $T_2$ is used, the first stage ($T_1$) being a low-voltage high gain stage, and the second stage ($T_2$) being a high-voltage but relatively low gain stage. Qith $V_1$ and $V_3$ set at a fixed low voltage $V_{LT}$, with $V_2$, $V_5$, $V_7$ and $V_8$ set at zero volts, and with $V_4$ set aw a relatively high voltage $V_{HT}$, the circuit is ready for direct copying. If no light falls on photoresistor $R_2$, due to a reading from a black portion of the original to be copied, then the voltage $V_{G1}$ at the base of transistor $T_1$ is substantially $V_{LT}$ since the resistance of $R_2$ is high. If light falls on the photoresistor $R_2$ due to a reading from a white portion of the original, the resistance of photoresistor $R_2$ decreases, and $V_{G1}$ falls to substantially zero.

With $V_{G1}$ at $V_{LT}$ (black original), the voltage $V_{G2}$ at the output of transistor $T_1$ is substantially zero, so the transistor $T_2$ is non-conductive, and a voltage of substantially $V_{HT}$ (as applied at $V_4$) appears at the stylus S. With $V_{G1}$ at zero (white original), the voltage $V_{G2}$ at the output of transistor $T_1$ is substantially $V_{LT}$, and transistor $T_2$ becomes conductive. This lowers the voltage of the stylus to substantially zero, so no output mark is made.

In addition to providing a direct copying capability, the circuit of Fig. 1 enables information from an image bar at a remote location to be read out, as well as enabling information to be sent to a remote image bar. These read-out and write-in capabilities may be used alone, or in combination with copying, thereby allowing electronic forms overlay techniques to be used, as well as editing. Interfacing between image bar circuits is achieved by way of transistor $T_3$, which acts as a bidirectional series gate.

The mode of operation of the circuit of Figure 1 is determined by the set of voltages $V_1$ to $V_6$. The following tables shows the operating conditions for the circuit. $V_7$ and $V_8$ are at zero volts throughout. In the read-out mode, output information appears at $V_0$, and in the write-in mode, data is input at $V_6$.

Table: operating conditions

| Mode and Condition | $V_1$ | $V_2$ | $V_3$ | $V_4$ | $V_5$ | $V_6$ | $V_{G1}$ | $V_{G2}$ | $V_S$ | $V_0$ | $Z_0$ |
|---|---|---|---|---|---|---|---|---|---|---|---|
| Copying Black | $V_{LT}$ | 0 | $V_{LT}$ | $V_{HT}$ | 0 | X | $V_{LT}$ | 0 | $V_{HT}$ | X | X |
| White | | | | | | | 0 | $V_{LT}$ | 0 | | |
| Read-Out Black | $V_{LT}$ | 0 | $V_{LT}$ | X | $V_{LT}$ | $V_{LT}$ | $V_{LT}$ | 0 | X | 0 | HI |
| White | | | | | $V_{LT}$ | $V_{LT}$ | 0 | $V_{LT}$ | | $V_{LT}$ | |
| Inhibit | | | | | 0 | $V_{LT}$ | | | | $V_{LT}$ | |
| Write-In Black | 0 | 0 | $V_{LT}$ | $V_{HT}$ | $V_{LT}$ | Data | 0 | 0 | $V_{HT}$ | 0 | LO |
| White | | | | | $V_{LT}$ | | | $V_{LT}$ | 0 | $V_{LT}$ | |
| Inhibit | | | | | 0 | | | $V_{LT}$ | | $V_{LT}$ | |
| Mixed Copying and Read-Out | $V_{LT}$ | 0 | $V_{LT}$ | $V_{HT}$ | $V_{LT}$ | $V_{LT}$ | | | | | HI |
| Mixed Copying and Write-In | $V_{LT}$ | 0 | $V_{LT}$ | $V_{HT}$ | $V_{LT}$ | Data | | | | | LO |
| Test White | 0 | 0 | $V_{LT}$ | $V_{HT}$ | 0 | X | 0 | $V_{LT}$ | 0 | X | X |
| Test Black | $V_{LT}$ | $V_{LT}$ | $V_{LT}$ | $V_{HT}$ | 0 | X | $V_{LT}$ | 0 | $V_{HT}$ | X | X |

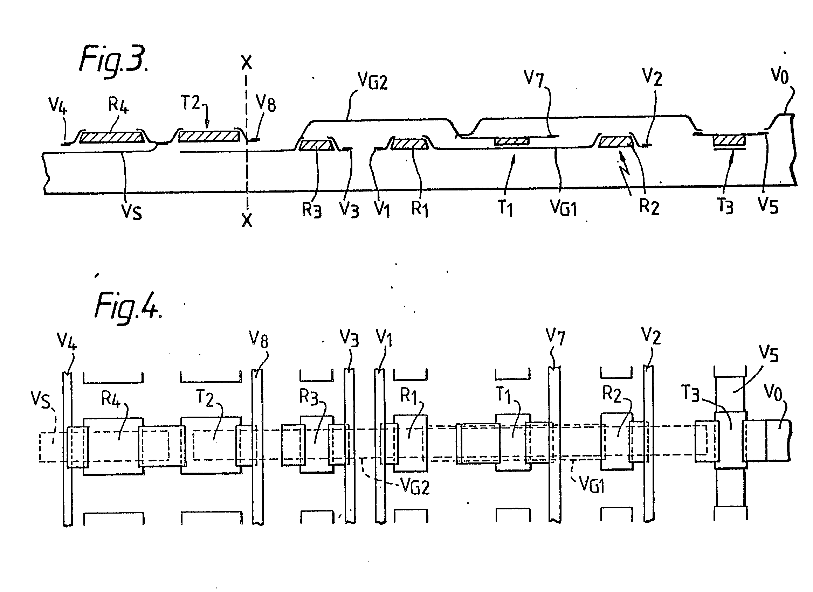

Referring now to Figures 2, 3 and 4, one way of putting the invention into effect is illustrated. Figure 2 shows the circuit elements of Figure 1 re-arranged to correspond physically with the layout of Figs. 3 and 4. The circuit elements, including thin film transistors $T_1$, $T_2$ and $T_3$, are deposited by thin film techniques on a substrate, such as a glass substrate, and a succession of circuits are laid out side by side with common lines for fixed voltages $V_1$ to $V_5$ and $V_7$ and $V_8$ running transversely through all the circuits as best seen in Figure 4. Each circuit has its own stylus output line (for voltage $V_S$), its own interfacing line (for voltage $V_0$), and its own photoresistor $R_2$. The photoresistor $R_2$ of each circuit is illuminated from below through the glass substrate. Neighbouring components (e.g. transistors $T_1$ and $T_3$) are shielded by the metallisation required to form the conductive interconnection, and are thus protected from photo-generated leakage by stray light. The amplifiers drive all the styli in parallel and can therefore present a continuous drive at the stylus nibs. The styli do not, therefore, need plating for either the breakdown or contact methods of charging.

Since only short pulses are normally involved, a storage capacitor can be provided easily within the amplifier by lengthening the bar at X—X in Figure 3 where the $V_{G2}$ line runs beneath the $V_8$ line.

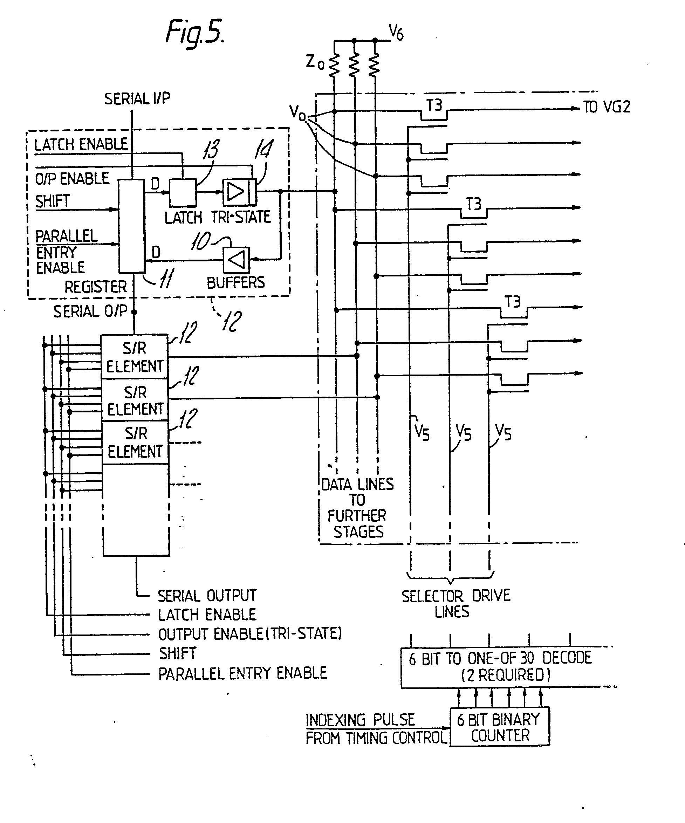

Suitable electronic interfacing for utilising the read-out and write-in capabilities of the image bar is shown in figure 5. Thin film transistor $T_3$ acts as bidirectional series gate, and the load impedances $Z_0$ provide bias from $V_6$.

In the read-out mode, i.e., when the image bar is being used to read a document and send the information to, for example, another (remote) image bar, a logical "OR" gate function occurs on each data line $V_0$. When a transistor $T_3$ is biassed into conduction ($V_5$ high) the associated data line $V_0$ follows the voltage $V_{G2}$ which is the amplified photosensor signal for that circuit element. The transistors $T_3$ are biassed into conduction by suitable drivers connected to the $V_5$ lines. The information on $V_0$ line is buffered via a buffer 10, into a register 11 in the shift register element 12 of the peripheral logic circuit, and sets the data input of the shift register. Data is loaded into the register by enabling parallel entry, and the video signals are shifted out by normal serial operation of the register.

In the write-in mode, i.e., when the image bar is being used to write information received from, for example, another (remote) image bar, the stylus drive transistor $T_2$ can be addressed via transistor $T_3$. Transistor $T_2$ follows an electronic signal provided by shift register latch 13. This is accomplished by selecting the appropriate series gate element (transistor $T_3$) and enabling the low impedance state of a tri-state buffer 14. Parallel entry to the shift register is disabled during this mode, and the photosensor circuit is also disabled by switching $V_1$ to the low state.

As already mentioned, the image bar may also be used in modes which combine copying with either writing or reading. Combining copying with writing allows electronic forms overlay and editing functions. Combining copying with reading allows output monitoring, giving a copy of transmitted documents. Harnessing several machines together allows simultaneous multiple copying with collation.

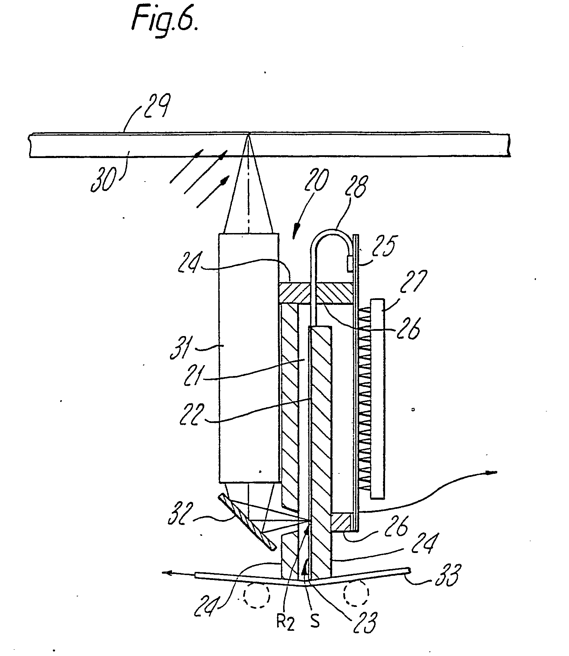

An example of an arrangement incorporating the layout of figures 2—5 is shown in figure 6. The image bar 20 comprises a glass substrate 21 which carries the thin film circuits 22. The stylus nibs 23 of the styli S are at the lower extremity of the thin film circuits 22. The glass substrate 21 and the thin film circuits 22 are encased in a potting material 24. A card 25 for peripheral circuits is secured to the potting material by means of card supports 26. The peripheral circuitry may be included, for example, in a forty-pin integrated circuit chip 27, with connections to the thin film circuits 22 being made by way of a flexi-connector 28.

The photoresistors $R_2$ are located just above the styli S, and a line image of a document 29 being copied is formed along the line of photoresistors. Document 29 is supported on a platen 30 and is illuminated by a light source (not shown). A strip lens 31 forms the required line image on photoresistors $R_2$ by way of a plane mirror 32. In order to form a complete image of the document being copied, relative movement takes place between the document and the image bar.

The electrical impulses supplied to stylus nibs 23 are used to form an image on an imaging sheet 33 which is passed under the nibs in contact with them and at the appropriate speed proportional to the speed of relative movement between the document and the image bar. Any suitable form of recording may be used. Thus, the imaging sheet 33 may record an image directly by coloration of the sheet due to the action of the electrical impulses supplied by the stylus nibs, or it may record an electrostatic latent image (on a dielectric-surfaced sheet) for subsequent development by standard electrographic techniques. Alternatively, electrochromic marking techniques may be used, or the outputs may be used to operate ink jets instead of the stylii described above.

## Claims

1. An imaging device comprising image reading and writing sections and a circuit assembly formed on a substrate (21), said circuit assembly including an array of aligned low voltage, photosensitive reading elements ($R_2$) formed on the substrate (21), an array of aligned marking elements (S), one for each reading element, arranged along one edge of the substrate with the ends (23) of said elements extending to said substrate edge forming an array of recording styli, characterised by an integrated circuit (22) interposed between each reading element ($R_2$), and an associated marking element (S) including amplifier means ($T_1$, $T_2$) to provide a low voltage signal proportional to the change in impedance upon exposure of an associated photosensitive reading element ($R_2$) and operative to provide a comparatively high voltage to an associated stylus for writing, each amplifier means including two or more thin film transistors, a first transistor ($T_1$) comprising a low-voltage, high gain stage, and a second transistor ($T_2$) comprising a high-voltage, lower gain stage.

2. The imaging device of claim 1 including a third transistor ($T_3$) arranged to act as a bidirectional series gate for enabling externally generated signals to be supplied via the second transistor ($T_2$) to its associated marking element (S), and for enabling signals produced by a reading element ($R_2$) and amplified by the first transistor ($T_1$) to be supplied to external circuitry.

3. The imaging device of claim 1 or claim 2 wherein said structure (21) carries optical means (31) for forming an image of an object to be copied on said array of photosensitive reading elements ($R_2$).

4. The imaging device of any one of claims 1 to 3 including an optical assembly comprising a strip lens (31) mounted in parallel but spaced relation to said integrated circuit assembly, the focal point of the input to said lens being across the width of a platen (30) for reading a document (29) and the focal point of the output form said lens being across the width of said array of photosensitive reading elements ($R_2$).

5. A copying apparatus including a platen (30) for supporting an object (29) to be copied, illumination means for illuminating said object, an imaging device (20) in accordance with any one of claims 1 to 4, means for causing relative movement between the object supporting means (30) and the imaging device (20), and image receiving means (33) arranged to cooperate with said marking elements (S) to record an image of said object.

6. An information network comprising at least two imaging devices (20) according to any one of claims 1 to 4, each of said devices being arranged so as to be capable of copying an original, of transmitting information representing an original to one or more others of said imaging devices, and of receiving and making a record of information received from one or more others of said devices.

**Revendications**

1. Dispositif de formation d'image comprenant des sections de lecture et d'écriture d'image et un circuit formé sur un substrat (21), ce circuit comportant un réseau d'éléments photosensibles ($R_2$) de lecture alignés, de basse tension, formés sur le substrat (21), un réseau d'éléments de marquage alignés (S), un pour chaque élément de lecture, disposés le long d'un bord du substrat avec les extrémités (23) des éléments s'étendant jusqu'au bord du substrat formant un réseau de styles d'enregistrement, caractérisé par un circuit intégré (22) interposé entre chaque élément de lecture ($R_2$) et un élément de marquage associé (S) comprenant un moyen d'amplificateur ($T_1$, $T_2$) pour fournir un signal basse tension proportionnel à la variation d'impédance lors de l'exposition d'un élément de lecture photosensible associé ($R_2$) et pouvant fonctionner pour fournir une tension relativement élevée à un style associé pour procéder à l'écriture, chaque moyen d'amplificateur comportant deux ou plusieurs transistors à couche mince, un premier transistor ($T_1$) comportant un étage basse tension, de gain élevé, et un second transistor ($T_2$) présentant un étage haut tension, de gain plus faible.

2. Dispositif de formation d'image selon la revendication 1, comportant un troisième transistor ($T_3$) disposé de manière à agir en porte bidirectionnelle en série afin de permettre la fourniture de signaux générés extérieurement, via le second transistor ($T_2$), à son élément de marquage associé (S), et de permettre à des signaux produits par un élément de lecture ($R_2$) et amplifiés par le premier transistor ($T_1$) d'être fournis à un circuit extérieur.

3. Dispositif de formation d'image selon la revendication 1 ou la revendication 2, où la structure (21) porte un moyen optique (31) pour former une image d'un objet à reproduire sur le réseau d'éléments photosensibles de lecture ($R_2$).

4. Dispositif de formation d'image selon l'une quelconque des revendications 1 à 3, comportant un ensemble optique constitué d'une lentille en bande (31) montée en parallèle, mais en en étant espacée, avec le circuit intégré, le foyer de l'entrée de la lentille se trouvant sur la largeur d'une platine (30) pour lecture d'un document (29) et le foyer de la sortie de la lentille sur la largeur du réseau d'éléments photosensibles de lecture ($R_2$).

5. Appareil de reproduction, comprenant une platine (30) pour supporter un objet (29) devant être reproduit, un moyen d'éclairage pour éclairer l'objet, un dispositif de formation d'image (20) en conformité avec l'une quelconque des revendications 1 à 4, un moyen pour provoquer un mouvement relatif entre le moyen de support d'objet (30) et le dispositif de formation d'image (20), et un moyen de réception d'image (33) disposé de manière à coopérer avec les éléments de marquage (S) pour enregistrer une image de l'objet.

6. Réseau d'information comprenant au moins deux dispositifs de formation d'image (20) selon l'une quelconque des revendications 1 à 4, chacun des dispositifs étant disposé de façon à être capable de reproduire un original, de transmettre une information représentant un original à un ou plusieurs autres des dispositifs de formation d'image, et de recevoir et faire un enregistrement de l'information provenant d'un ou de plusieurs autres des dispositifs.

**Patentansprüche**

1. Abbildungsgerät mit bildlesenden und bildschreibenden Abschnitten und einer Schaltungsanordnung, die auf einem Grundmaterial (21) ausgebildet its, wobei die Schaltungsanordnung ein Feld von ausgerichteten photoempfindlichen Leseelementen mit niedriger Spannung ($R_2$), die auf dem Grundmaterial (21) ausgebildet sind, aufweist, sowie ein Feld von ausgerichteten Markierungselementen (S) aufweist, von denen jeweils eines für jedes lesende Element vorgesehen ist, die längs der Kante des Grundmaterials angeordnet sind, wobei sich die Enden (23) der Elemente zu der Grundmaterialkante erstrecken, wobei ein Feld eines Aufzeichnungsgriffels gebildet wird, gekennzeicxet durch eine integrierte Schaltung (22), die zwischen jedem lesenden Element ($R_2$) und dem zugeordneten Markierungselement (S) einschließlich einer Verstärkereinrichtung ($T_1$, $T_2$) angeordnet ist, um ein Niederspannungssignal zu liefern, das proportional zur Impedanzänderung bei Belichten eines zugeordneten photoempfindlichen lesenden Elementes ($R_2$) ist und wirksam ist, um eine relativ hohe Spannung für einen zugeordneten Griffel zum Schreiben zu liefern, wobei jede Verstärkereinrichtung zwei oder mehr Dünnfilmtransistoren aufweist, wobei ein erster Transistor ($T_1$) eine Stufe mit niederer Spannung und hoher Verstärkung aufweist und wobei ein zweiter Transistor ($T_2$) eine Stufe mit hoher Spannung und niederer Verstärkung aufweist.

2. Abbildungsgerät nach Anspruch 1, mit einem dritten Transistor ($T_3$), der angeordnet ist, um als bidirektionales Reihengatter zu arbeiten, um außerhalb erzeugte Signale über den zweiten Transistor ($T_2$) zu dessen zugeordneten Markierungselement (S) zuzuführen, und um durch ein lesendes Element ($R_2$) erzeugte und durch den ersten Transistor ($T_1$) verstärkte Signale zu einer äußeren Schaltung zuzuführen.

3. Abbildungsgerät nach Anspruch 1 oder 2, bei dem die Struktur (21) eine optische Einrichtung (31) trägt, um ein Bild eines zu kopierenden Objektes auf dem Feld von photoempfindlichen, lesenden Elementen (R₂) zu bilden.

4. Abbildungsgerät nach einem der Ansprüche 1 bis 3, mit einer optischen Anordnung, die eine Streifenlinse (31) aufweist, die parallel zur integrierten Schaltungsanordnung, jedoch in einer beabstandeten Beziehung zu dieser angeordnet ist, wobei der Brennpunkt der Eingangsseite der Linse quer zur Breite einer Platte (30) zum Lesen eines Dokumentes (29) liegt, und wobei der Brennpunkt der Ausgangsseite der Linse quer zur Breite des Feldes von photoempfindlichen lesenden Elementen (R₂) liegt.

5. Ein Kopiergerät mit einer Platte (30) zum tragen eines zu kopierenden Objektes (29), mit einer Belichtungseinrichtung zum Belichten des Objektes, mit einem Abbildungsgerät (20) nach einem der Ansprüche 1 bis 4, ferner mit einer Einrichtung zum Verursachen einer relativen Bewegung zwischen der das Objekt tragenden Einrichtung (30) und dem Abbildungsgerät (20), und einer Bildempfangseinrichtung (33), die angeordnet ist, um mit den markierenden Elementen (S) zusammenzuarbeiten, um ein Bild des Objektes aufzuzeichnen.

6. Ein Informationsnetzwerk mit wenigstens zwei Abbildungsgeräten (20) nach einem der Ansprüche 1 bis 4, wobei jedes Gerät angeordnet ist, um dazu geeignet zu sein, ein Original zu kopieren und um eine Information zu einem oder mehreren weiteren Abbildungsgeräten zu übertragen, die das Original darstellt, und um eine von einem oder mehreren anderen dieser Geräte empfangene Information zu empfangen und um eine Aufzeichnung zu erstellen.

*Fig.1.*

*Fig.2.*

0 074 719

Fig.3.

V0
V5
T3
V2
R2
V7
VG1
T1
R1 R1
VG2
V1
V3
R3
V8
X — X
T2
VS
R4
V4

Fig.4.

V5
V0
T3
V2
R2
VG1
V7
T1
R1
VG2
V1
V3
R3
V8
T2
R4
V4
VS

# 0 074 719

## Fig.5.

SERIAL I/P

LATCH ENABLE

O/P ENABLE

SHIFT

*13*  *14*

D  LATCH  TRI-STATE

PARALLEL
ENTRY
ENABLE

D  *10*  BUFFERS

*11*

REGISTER

SERIAL O/P

*12*

S/R ELEMENT  *12*

S/R ELEMENT  *12*

S/R ELEMENT  *12*

SERIAL OUTPUT
LATCH ENABLE
OUTPUT ENABLE (TRI-STATE)
SHIFT
PARALLEL ENTRY ENABLE

$Z_0$  $V_6$

$V_0$  T3  TO VG2

T3

T3

$V_5$  $V_5$  $V_5$

DATA LINES
TO
FURTHER
STAGES

SELECTOR DRIVE
LINES

6 BIT TO ONE-OF 30 DECODE
(2 REQUIRED)

INDEXING PULSE
FROM TIMING CONTROL  6 BIT BINARY
COUNTER

3

# Fig.6.